# EUROPEAN PATENT APPLICATION

(11) **EP 4 617 137 A1**
(43) Date of publication of application: **17.09.2025**
(21) Application number: 22966856.1
(22) Date of filing: 30.11.2022
(51) Int. Cl.: B60W 50/00, H04L 67/12

(54) **DATA PROCESSING METHOD AND APPARATUS, AND INTELLIGENT DRIVING DEVICE**

(71) Applicant: Shenzhen Yinwang Intelligent Technologies Co., Ltd., Shenzhen, Guangdong 518129 (CN)
(72) Inventor: MA, Zaimin, Shenzhen, Guangdong 518129 (CN)
(74) Representative: Gill Jennings & Every LLP
(86) International application number: PCT/CN2022/135656
(87) International publication number: WO 2024/113265

(57) **Abstract**

Embodiments of this application provide a data processing method and apparatus, and an intelligent driving device. The data processing method includes: determining that the intelligent driving device is in a first driving scenario; obtaining first data from a sensor in a first sensor group and processing the first data, where the first data corresponds to a first frame rate; and when it is determined that the intelligent driving device switches from the first driving scenario to a second driving scenario, obtaining second data from a sensor in a second sensor group and processing the second data, or obtaining third data from the sensor in the first sensor group and processing the third data, where the third data corresponds to a second frame rate, the second sensor group includes a part of sensors in the first sensor group, and the first frame rate is greater than the second frame rate. Embodiments of this application may be applied to an intelligent vehicle or an electric vehicle, to help improve endurance and economy of the vehicle.

## Description

### TECHNICAL FIELD

Embodiments of this application relate to the field of intelligent driving, and more specifically, to a data processing method and apparatus, and an intelligent driving device.

### BACKGROUND

With development of intelligent vehicles, more vehicles are configured with intelligent driving systems, for example, an advanced driver assistance system (advanced driver assistance system, ADAS). The ADAS includes some power-intensive components, for example, a system on a chip (system on a chip, SOC). In a scenario in which these power-intensive components remain power-intensive, endurance and economy of an intelligent driving device are affected.

### SUMMARY

Embodiments of this application provide a data processing method and apparatus, and an intelligent driving device, to help improve endurance and economy of the intelligent driving device.

The intelligent driving device in this application may include a land transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flying car, or a train), an industrial vehicle (for example, a forklift, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For another example, the intelligent driving device may be a transportation means like an aircraft or a ship. In addition to the intelligent driving device, embodiments of this application may be applied to another device, for example, a terminal device (for example, a mobile phone) or a robot (for example, a drone).

According to a first aspect, a data processing method is provided. The method includes: obtaining first data from a sensor in a first sensor group and processing the first data, where the first data corresponds to a first frame rate; and when it is determined that a preset condition is met, obtaining second data from a sensor in a second sensor group and processing the second data, or obtaining third data from the sensor in the first sensor group and processing the third data, where the third data corresponds to a second frame rate, and the first frame rate is different from the second frame rate.

In this embodiment of this application, an intelligent driving device can process the first data from the first sensor group, and can process the second data from the second sensor group or process the third data from the sensor in the first sensor group when the preset condition is met. In this way, the intelligent driving device can flexibly choose to process data from different sensors, or choose to process data from a same sensor at different frame rates. This helps improve flexibility of the intelligent driving device during data processing.

With reference to the first aspect, in some implementations of the first aspect, the second sensor group includes a part of sensors in the first sensor group, and the first frame rate is greater than the second frame rate.

In this embodiment of this application, when the preset condition is met, data from the part of sensors is processed or the third data corresponding to a reduced frame rate is processed. This helps reduce power consumption of the intelligent driving device, and further improves endurance and economy of the intelligent driving device.

With reference to the first aspect, in some implementations of the first aspect, the obtaining first data from a sensor in a first sensor group and processing the first data includes: when it is determined that the intelligent driving device is in a first driving scenario, obtaining the first data from the sensor in the first sensor group and processing the first data, where the first driving scenario is associated with the first frame rate; and the when it is determined that a preset condition is met, obtaining second data from a sensor in a second sensor group and processing the second data, or obtaining third data from the sensor in the first sensor group and processing the third data includes: when it is determined that the intelligent driving device switches from the first driving scenario to a second driving scenario, obtaining the second data from the sensor in the second sensor group and processing the second data, or obtaining the third data from the sensor in the first sensor group and processing the third data, where the second driving scenario is associated with the second frame rate.

In this embodiment of this application, when the intelligent driving device switches from the first driving scenario to the second driving scenario, the intelligent driving device can process the second data from the sensor in the second sensor group or process the third data collected by the sensor in the first sensor group. This helps reduce power consumption of the intelligent driving device, and further helps improve endurance and economy of the intelligent driving device. In addition, this helps avoid an excessively high temperature of a component in an intelligent driving system, and helps improve reliability and security of the intelligent driving system.

In some possible implementations, a level of automation corresponding to the first driving scenario is higher than a level of automation corresponding to the second driving scenario. For example, the first driving scenario is a highway pilot scenario, and the second driving scenario is a highway assist scenario.

In some possible implementations, a driving function corresponding to the first driving scenario is different from a driving function corresponding to the second driving scenario.

In some possible implementations, the obtaining second data from a sensor in a second sensor group and processing the second data includes: obtaining data from the sensor in the first sensor group and processing the second data that is in the data and that is collected by the sensor in the second sensor group.

In some possible implementations, before the obtaining second data from a sensor in a second sensor group and processing the second data, the method includes: disabling sensors in the first sensor group except the sensors in the second sensor group.

In some possible implementations, the disabling sensors in the first sensor group except the sensors in the second sensor group includes: disabling the sensors in the first sensor group except the sensors in the second sensor group by using a power gate (power gating) or a clock gate (clock gating).

The disabling the sensors in the first sensor group except the sensors in the second sensor group by using a power gate or a clock gate may also be understood as disabling the sensors in the first sensor group except the sensors in the second sensor group by turning off a power supply or disabling a clock.

With reference to the first aspect, in some implementations of the first aspect, when it is determined that the intelligent driving device switches from the first driving scenario to the second driving scenario, the second data is obtained from the sensor in the second sensor group and the second data is processed. The method further includes: when it is determined that the intelligent driving device switches from the second driving scenario to a third driving scenario, obtaining fifth data from a sensor in a third sensor group and processing the fifth data, or obtaining sixth data from the sensor in the second sensor group and processing the sixth data, where the third driving scenario is associated with a third frame rate, the third sensor includes a part of sensors in the second sensor group, and a frame rate corresponding to the second data is greater than a frame rate corresponding to the sixth data.

In this embodiment of this application, when the intelligent driving device switches from the second driving scenario to the third driving scenario, the intelligent driving device can process the fifth data from the sensor in the third sensor group or process the sixth data collected by the sensor in the second sensor group. This helps reduce power consumption of the intelligent driving device, and further helps improve endurance and economy of the intelligent driving device. In addition, reducing power consumption of the intelligent driving device can avoid an excessively high temperature of a component, and help improve reliability and security of the intelligent driving system.

With reference to the first aspect, in some implementations of the first aspect, the processing the first data includes: processing the first data by using a plurality of processing apparatuses in a first processor; and the obtaining second data from a sensor in a second sensor group and processing the second data, or obtaining third data from the sensor in the first sensor group and processing the third data includes: processing the second data by using a part of processing apparatuses in the plurality of processing apparatuses, or processing the third data by using the part of processing apparatuses.

In this embodiment of this application, when the intelligent driving device switches from the first driving scenario to the second driving scenario, the intelligent driving device can select the part of processing apparatuses from the plurality of processing apparatuses to process the second data or the third data. In this way, reducing a quantity of processing apparatuses helps reduce power consumption of the intelligent driving device, and further helps improve endurance and economy of the intelligent driving device. In addition, reducing power consumption of the intelligent driving device can avoid an excessively high temperature of a component, and help improve reliability and security of the intelligent driving system.

In some possible implementations, before the processing the second data or the third data, the method further includes: disabling processing apparatuses other than the part of processing apparatuses in the plurality of processing apparatuses.

In some possible implementations, the disabling processing apparatuses other than the part of processing apparatuses in the plurality of processing apparatuses includes: disabling the processing apparatuses other than the part of processing apparatuses in the plurality of processing apparatuses by using a power gate or a clock gate.

In some possible implementations, the processing apparatus may be a central processing unit (central processing unit, CPU) or a computing core. For example, the computing core may be an artificial intelligence core (artificial intelligence core, AI core), a graphics processing unit (graphics processing unit, GPU) core, or the like.

With reference to the first aspect, in some implementations of the first aspect, before the obtaining second data from a sensor in a second sensor group and processing the second data, or obtaining third data from the sensor in the first sensor group and processing the third data, the method further includes: determining that a temperature of the first processor is greater than or equal to a first preset temperature and less than a second preset temperature, where the second preset temperature is greater than the first preset temperature.

In this embodiment of this application, when the intelligent driving device switches from the first driving scenario to the second driving scenario and the temperature of the first processor is greater than or equal to the first preset temperature and less than the second preset temperature, the intelligent driving device can process the second data from the sensor in the second sensor group or process the third data collected by the sensor in the first sensor group. This helps further improve decision-making accuracy of the intelligent driving device through switching of an intelligent driving scenario and a temperature change of the first processor. In addition, this helps avoid an excessively high temperature of a component in the intelligent driving system, and helps improve reliability and security of the intelligent driving system.

With reference to the first aspect, in some implementations of the first aspect, the method further includes: when it is determined that the temperature of the first processor is greater than or equal to the second preset temperature, stopping data processing by using the first processor.

In this embodiment of this application, when the temperature of the first processor is greater than or equal to the second preset temperature, data processing by using the first processor may be stopped. This helps avoid impact on reliability and security of the intelligent driving device system caused by an excessively high temperature of the first processor, and also helps avoid damage to the first processor.

In some possible implementations, the method further includes: when data processing by using the first processor is stopped, taking over the intelligent driving system or the intelligent driving device by using a micro controller unit (micro controller unit, MCU).

With reference to the first aspect, in some implementations of the first aspect, the method further includes: when it is determined that duration in which the temperature of the first processor is greater than or equal to the second preset temperature is greater than or equal to first preset duration, stopping data processing by using the first processor.

In this embodiment of this application, when the duration in which the temperature of the first processor is greater than or equal to the second preset temperature is greater than or equal to the first preset duration, data processing by using the first processor may be stopped. This helps avoid impact on reliability and security of the intelligent driving device system caused by an excessively high temperature of the first processor, and also helps avoid damage to the first processor.

With reference to the first aspect, in some implementations of the first aspect, the method further includes: when it is determined that the intelligent driving device switches from the second intelligent driving scenario to the first intelligent driving scenario, obtaining fourth data from the sensor in the first sensor group and processing the fourth data, where the fourth data corresponds to the first frame rate.

With reference to the first aspect, in some implementations of the first aspect, the processing the first data includes: when it is determined that the temperature of the first processor is less than the first preset temperature, processing the first data by using the first processor; and the when it is determined that a preset condition is met, obtaining second data from a sensor in a second sensor group and processing the second data, or obtaining third data from the sensor in the first sensor group and processing the third data includes: when it is determined that the temperature of the first processor is greater than or equal to the first preset temperature and less than the second preset temperature, obtaining the second data from the sensor in the second sensor group and processing the second data, or obtaining the third data from the sensor in the first sensor group and processing the third data, where the first preset temperature is less than the second preset temperature.

In this embodiment of this application, when the temperature of the first processor is excessively high, the first processor can choose to process the second data from the part of sensors or process the third data corresponding to a low frame rate. This helps reduce power consumption of the intelligent driving device, and further improves endurance and economy of the intelligent driving device. In addition, this helps avoid impact on reliability and security of the intelligent driving system caused by an excessively high temperature of the first processor, and also helps avoid damage to the first processor.

In some possible implementations, the obtaining second data from a sensor in a second sensor group and processing the second data includes: obtaining data from the sensor in the first sensor group and processing the second data that is in the data and that is collected by the sensor in the second sensor group.

In some possible implementations, before the obtaining second data from a sensor in a second sensor group and processing the second data, the method includes: disabling sensors in the first sensor group except the sensors in the second sensor group.

With reference to the first aspect, in some implementations of the first aspect, the first processor includes a plurality of processing apparatuses. The processing the first data by using the first processor includes: processing the first data by using the plurality of processing apparatuses. The obtaining second data from a sensor in a second sensor group and processing the second data, or obtaining third data from the sensor in the first sensor group and processing the third data includes: processing the second data by using a part of processing apparatuses in the plurality of processing apparatuses, or processing the third data by using the part of processing apparatuses.

In this embodiment of this application, when the temperature of the first processor is greater than or equal to the first preset temperature and less than the second preset temperature, the intelligent driving device can select the part of processing apparatuses from the plurality of processing apparatuses to process the second data or the third data. In this way, reducing a quantity of processing apparatuses helps reduce power consumption of the intelligent driving device, and further helps improve endurance and economy of the intelligent driving device. In addition, reducing power consumption of the intelligent driving device can prevent a temperature of a component in the intelligent driving system from continuously increasing, help improve reliability and security of the intelligent driving system, and also help avoid damage to the component in the intelligent driving system.

With reference to the first aspect, in some implementations of the first aspect, the method further includes: when it is determined that the temperature of the first processor is greater than or equal to the second preset temperature, stopping data processing by using the first processor.

In this embodiment of this application, when the temperature of the first processor is greater than or equal to the second preset temperature, data processing by using the first processor may be stopped. This helps avoid impact on reliability and security of the intelligent driving device system caused by an excessively high temperature of the first processor, and also helps avoid damage to the first processor.

In some possible implementations, the method further includes: when data processing by using the first processor is stopped, the intelligent driving system or the intelligent driving device is taken over by using an MCU.

With reference to the first aspect, in some implementations of the first aspect, the method further includes: when it is determined that duration in which the temperature of the first processor is greater than or equal to the second preset temperature is greater than or equal to first preset duration, stopping data processing by using the first processor.

In this embodiment of this application, when the duration in which the temperature of the first processor is greater than or equal to the second preset temperature is greater than or equal to the first preset duration, data processing by using the first processor may be stopped. This helps avoid impact on reliability and security of the intelligent driving device system caused by an excessively high temperature of the first processor, and also helps avoid damage to the first processor.

With reference to the first aspect, in some implementations of the first aspect, the method further includes: when it is determined that the temperature of the first processor is less than or equal to a third preset temperature, obtaining fourth data from the sensor in the first sensor group and processing the fourth data, where the fourth data corresponds to the first frame rate, and the first preset temperature is greater than the third preset temperature.

In this embodiment of this application, a hysteresis temperature (a difference between the first preset temperature and the third preset temperature) is set, so that the intelligent driving system can be prevented from switching back and forth in different system states. This helps improve reliability and security of the intelligent driving system.

With reference to the first aspect, in some implementations of the first aspect, the processing the first data includes: processing the first data in a first time period; and the when it is determined that a preset condition is met, obtaining second data from a sensor in a second sensor group and processing the second data, or obtaining third data from the sensor in the first sensor group and processing the third data includes: when the first time period ends, obtaining the second data from the sensor in the second sensor group and processing the second data, or obtaining the third data from the sensor in the first sensor group and processing the third data.

With reference to the first aspect, in some implementations of the first aspect, the second sensor group includes the first sensor group and a third sensor group, and the first frame rate is less than the second frame rate.

With reference to the first aspect, in some implementations of the first aspect, the obtaining first data from a sensor in a first sensor group and processing the first data includes: when it is determined that the intelligent driving device is in a first driving scenario, obtaining the first data from the sensor in the first sensor group and processing the first data, where the first driving scenario is associated with the first frame rate; and the when it is determined that a preset condition is met, obtaining second data from a sensor in a second sensor group and processing the second data, or obtaining third data from the sensor in the first sensor group and processing the third data includes: when it is determined that the intelligent driving device switches from the first driving scenario to a second driving scenario, obtaining the second data from the sensor in the second sensor group and processing the second data, or obtaining the third data from the sensor in the first sensor group and processing the third data, where the second driving scenario is associated with the second frame rate.

In some possible implementations, a level of automation corresponding to the first driving scenario is lower than a level of automation corresponding to the second driving scenario.

For example, the first driving scenario is a highway assist scenario, and the second driving scenario is a highway pilot scenario.

With reference to the first aspect, in some implementations of the first aspect, the processing the first data includes: when it is determined that a temperature of a first processor is greater than or equal to a fourth preset temperature, processing the first data by using the first processor; and the when it is determined that a preset condition is met, obtaining second data from a sensor in a second sensor group and processing the second data, or obtaining third data from the sensor in the first sensor group and processing the third data includes: when it is determined that the temperature of the first processor is less than the fourth preset temperature and greater than or equal to the fifth preset temperature, obtaining the second data from the sensor in the second sensor group and processing the second data, or obtaining the third data from the sensor in the first sensor group and processing the third data, where the fourth preset temperature is greater than the fifth preset temperature.

According to a second aspect, a data processing apparatus is provided. The apparatus includes: a data processing unit, configured to: obtain first data from a sensor in a first sensor group and process the first data, where the first data corresponds to a first frame rate; and a determining unit, configured to determine that a preset condition is met. The data processing unit is further configured to: obtain second data from a sensor in a second sensor group and process the second data, or obtain third data from the sensor in the first sensor group and process the third data, where the third data corresponds to a second frame rate, and the first frame rate is different from the second frame rate.

With reference to the second aspect, in some implementations of the second aspect, the second sensor group includes a part of sensors in the first sensor group, and the first frame rate is greater than the second frame rate.

With reference to the second aspect, in some implementations of the second aspect, the data processing unit is configured to: when the determining unit determines that an intelligent driving device is in a first driving scenario, obtain the first data from the sensor in the first sensor group and process the first data, where the first driving scenario is associated with the first frame rate; and when the determining unit determines that the intelligent driving device switches from the first driving scenario to a second driving scenario, obtain the second data from the sensor in the second sensor group and process the second data, or obtain the third data from the sensor in the first sensor group and process the third data, where the second driving scenario is associated with the second frame rate.

With reference to the second aspect, in some implementations of the second aspect, the data processing unit is configured to: process the first data by using a plurality of processing apparatuses in a first processor; and process the second data by using a part of processing apparatuses in the plurality of processing apparatuses, or process the third data by using the part of processing apparatuses.

With reference to the second aspect, in some implementations of the second aspect, the determining unit is further configured to: before the data processing unit processes the second data or the third data, determine that a temperature of the first processor is greater than or equal to a first preset temperature and less than a second preset temperature, where the second preset temperature is greater than the first preset temperature.

With reference to the second aspect, in some implementations of the second aspect, the determining unit is further configured to determine that the temperature of the first processor is greater than or equal to the second preset temperature; and the data processing unit is further configured to stop data processing by using the first processor.

With reference to the second aspect, in some implementations of the second aspect, the determining unit is further configured to determine that duration in which the temperature of the first processor is greater than or equal to the second preset temperature is greater than or equal to first preset duration; and the data processing unit is further configured to stop data processing by using the first processor.

With reference to the second aspect, in some implementations of the second aspect, the determining unit is further configured to determine that the intelligent driving device switches from the second intelligent driving scenario to the first intelligent driving scenario; and the data processing unit is further configured to: obtain fourth data from the sensor in the first sensor group and process the fourth data, where the fourth data corresponds to the first frame rate.

With reference to the second aspect, in some implementations of the second aspect, the data processing unit is configured to: process the first data by using a first processor; and when it is determined that a temperature of the first processor is greater than or equal to a first preset temperature and less than a second preset temperature, obtain the second data from the sensor in the second sensor group and process the second data, or obtain the third data from the sensor in the first sensor group and process the third data, where the first preset temperature is less than the second preset temperature.

With reference to the second aspect, in some implementations of the second aspect, the first processor includes a plurality of processing apparatuses, and the data processing unit is configured to: process the first data by using the plurality of processing apparatuses; and process the second data by using a part of processing apparatuses in the plurality of processing apparatuses, or process the third data by using the part of processing apparatuses.

With reference to the second aspect, in some implementations of the second aspect, the determining unit is further configured to determine that the temperature of the first processor is greater than or equal to the second preset temperature; and the data processing unit is further configured to stop data processing by using the first processor.

With reference to the second aspect, in some implementations of the second aspect, the determining unit is further configured to determine that duration in which the temperature of the first processor is greater than or equal to the second preset temperature is greater than or equal to first preset duration; and the data processing unit is further configured to stop data processing by using the first processor.

With reference to the second aspect, in some implementations of the second aspect, the determining unit is further configured to determine that the temperature of the first processor is less than or equal to a third preset temperature; and the data processing unit is further configured to: obtain fourth data from the sensor in the first sensor group and process the fourth data, where the fourth data corresponds to the first frame rate, and the first preset temperature is greater than the third preset temperature.

With reference to the second aspect, in some implementations of the second aspect, the second sensor group includes the first sensor group and a third sensor group, and the first frame rate is less than the second frame rate.

With reference to the second aspect, in some implementations of the second aspect, the data processing unit is configured to: when the determining unit determines that an intelligent driving device is in a first driving scenario, obtain the first data from the sensor in the first sensor group and process the first data, where the first driving scenario is associated with the first frame rate; and when the determining unit determines that the intelligent driving device switches from the first driving scenario to a second driving scenario, obtain the second data from the sensor in the second sensor group and process the second data, or obtain the third data from the sensor in the first sensor group and process the third data, where the second driving scenario is associated with the second frame rate.

With reference to the second aspect, in some implementations of the second aspect, the data processing unit is configured to: process the first data by using a first processor; and when the determining unit determines that a temperature of the first processor is less than a fourth preset temperature and greater than or equal to a fifth preset temperature, obtain the second data from the sensor in the second sensor group and process the second data, or obtain the third data from the sensor in the first sensor group and process the third data, where the fourth preset temperature is greater than the fifth preset temperature.

According to a third aspect, this application provides a data processing apparatus. The apparatus includes a processing unit and a storage unit. The storage unit is configured to store instructions. The processing unit executes the instructions stored in the storage unit, to enable the apparatus to perform any possible method according to the first aspect.

According to a fourth aspect, this application provides an intelligent driving device. The intelligent driving device includes any possible apparatus according to the second aspect, or includes the apparatus according to the third aspect.

With reference to the fourth aspect, in some implementations of the fourth aspect, the intelligent driving device is a vehicle.

According to a fifth aspect, this application provides a computer program product. The computer program product includes computer program code. When the computer program code is run on a computer, the computer is enabled to perform the method according to any possible implementation of the first aspect.

It should be noted that some or all of the computer program code may be stored in a first storage medium. The first storage medium may be encapsulated with a processor, or may be encapsulated separately from a processor. This is not specifically limited in embodiments of this application.

According to a sixth aspect, this application provides a computer-readable medium. The computer-readable medium stores program code. When the computer program code is run on a computer, the computer is enabled to perform the method according to any possible implementation of the first aspect.

According to a seventh aspect, this application provides a chip. The chip includes a circuit, and the circuit is configured to perform any possible method according to the first aspect.

### BRIEF DESCRIPTION OF DRAWINGS

FIG. 1 is a functional block diagram of an intelligent driving device according to an embodiment of this application;
FIG. 2 is a diagram of a structure of a vehicle according to an embodiment of this application;
FIG. 3 is a schematic flowchart of a data processing method according to an embodiment of this application;
FIG. 4 is a diagram in which an intelligent driving device is in different system states according to an embodiment of this application;
FIG. 5 is a schematic flowchart of a system state switching method according to an embodiment of this application; and
FIG. 6 is a block diagram of a data processing apparatus according to an embodiment of this application.

### DESCRIPTION OF EMBODIMENTS

In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are merely used to distinguish between different described objects, and do not limit a position, a sequence, a priority, a quantity, or content of the described objects. In embodiments of this application, use of a prefix word for distinguishing between described objects, like an ordinal number, does not constitute a limitation on the described object. For descriptions of the described object, refer to context descriptions in the claims or embodiments, and use of the prefix word should not constitute a redundant limitation. In addition, in descriptions of embodiments, "a plurality of" means two or more unless otherwise specified.

The following describes the technical solutions in embodiments of this application with reference to the accompanying drawings in embodiments of this application.

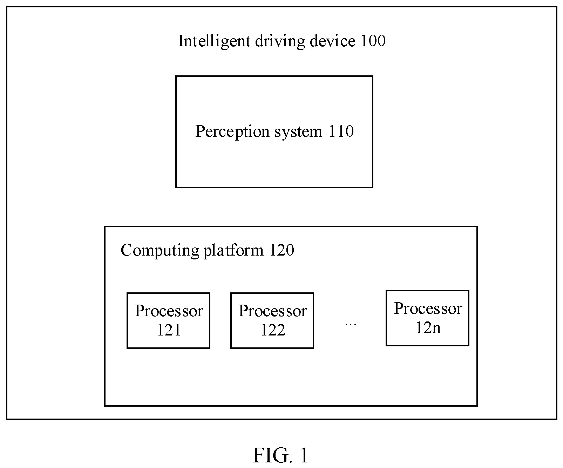

FIG. 1 is a functional block diagram of an intelligent driving device 100 according to an embodiment of this application. The intelligent driving device 100 may include a perception system 110 and a computing platform 120. The perception system 110 may include one or more sensors that sense information about an ambient environment of the intelligent driving device 100. For example, the perception system 110 may include a positioning system, and the positioning system may be a global positioning system (global positioning system, GPS), a BeiDou system, or another positioning system. The perception system 110 may further include one or more of an inertial measurement unit (inertial measurement unit, IMU), a lidar, a millimeter-wave radar, an ultrasonic radar, and a camera apparatus.

Some or all of functions of the intelligent driving device 100 may be controlled by the computing platform 120. The computing platform 120 may include one or more processors, for example, processors 121 to 12n (where n is a positive integer), and the processor is a circuit that has a signal processing capability. In an implementation, the processor may be a circuit that has instruction reading and running capabilities, for example, a CPU, a microprocessor, a GPU (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may include a memory, and the memory is configured to store instructions. Some or all of the processors 121 to 12n may invoke the instructions in the memory, to implement a corresponding function.

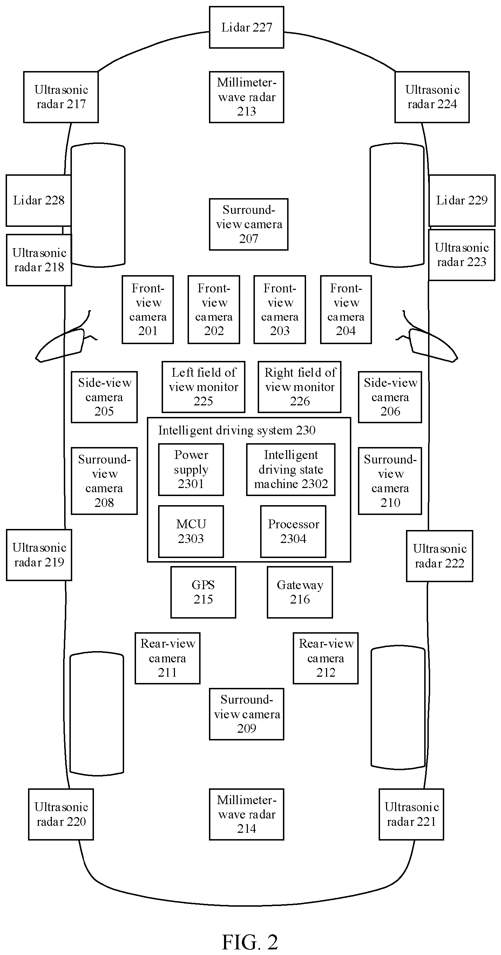

For example, the intelligent driving device 100 is a vehicle. FIG. 2 is a diagram of a structure of a vehicle 200 according to an embodiment of this application. As shown in FIG. 2, the vehicle 200 may include front-view cameras 201 to 204, side-view cameras 205 and 206, surround-view cameras 207 to 210, rear-view cameras 211 and 212, millimeter-wave radars 213 and 214, a GPS 215, a gateway 216, ultrasonic radars 217 to 224, a left field of view monitor 225, a right field of view monitor 226, lidars 227 to 229, and an intelligent driving system 230. The intelligent driving system 230 includes a power supply 2301, an intelligent driving state machine 2302, an MCU 2303, and a processor 2304. The processor 2304 may include a plurality of processing apparatuses. For example, the processing apparatus is an SOC. The processor 2304 may include a plurality of SOCs (for example, an SOC 1 to an SOC n, where n is a positive integer greater than 1). For another example, the processing apparatus is a computing core. The processor 2304 may include a plurality of computing cores. The power supply 2301 is configured to control the MCU 2303 and the processor 2304 to be powered on or powered off. The intelligent driving state machine 2302 is configured to determine a current driving scenario of the vehicle 200, or is configured to determine a temperature of the processor 2304. The processor 2304 may determine, based on a result output by the intelligent driving state machine 2302, specific sensors whose data needs to be processed, to obtain a data processing result. The processor 2304 may further generate a vehicle control instruction based on the data processing result, and send the vehicle control instruction to an electronic control unit (electronic control unit, ECU).

The MCU 2303 may be configured to: when the processor 2304 fails or has an excessively high temperature, control the vehicle 200 based on data collected by the sensor. For example, when a temperature of the processor 2304 is greater than or equal to 105°C, the power supply 2301 may be used to control the processor 2304 to be powered off. In this case, the MCU 2303 may receive the data collected by the sensor. The MCU 2303 may generate the vehicle control instruction based on the data collected by the sensor. The vehicle control instruction may be used for safe parking of the vehicle.

For example, if the processor 2304 includes a plurality of SOCs, the temperature of the processor 2304 may be a temperature of a SOC with the highest temperature in the plurality of SOCs. Alternatively, if the processor 2304 includes a plurality of computing cores, the temperature of the processor 2304 may be a temperature of a computing core with the highest temperature in the plurality of computing cores.

The front-view cameras 201 to 204, the side-view cameras 205 and 206, the surround-view cameras 207 to 210, the rear-view cameras 211 and 212, the millimeter-wave radars 213 and 214, the GPS 215, the ultrasonic radars 217 to 224, and the lidars 227 to 229 are sensors in the vehicle 200, and may be included in the perception system 110. The intelligent driving system 230 may be in the computing platform 120.

The gateway 216, the left field of view monitor 225, and the right field of view monitor 226 may be peripherals in the vehicle 200.

The foregoing structure of the vehicle 200 is merely an example. A quantity and types of sensors and peripherals included in the vehicle 200 are not specifically limited in embodiments of this application.

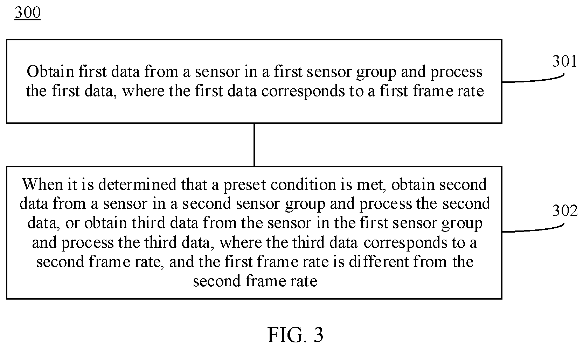

FIG. 3 is a schematic flowchart of a data processing method 300 according to an embodiment of this application. The method 300 may be performed by the intelligent driving device 100 or the vehicle 200, or the method 300 may be performed by the computing platform 120, or the method 300 may be performed by the SOC in the computing platform 120, or the method 300 may be performed by the processor in the computing platform 120, or the method 300 may be performed by the intelligent driving system 230, or the method 300 may be performed by the processor 2304. As shown in FIG. 3, the method 300 includes the following steps.

S301: Obtain first data from a sensor in a first sensor group and process the first data, where the first data corresponds to a first frame rate.

In an embodiment, the vehicle 200 is used as an example, and sensors and peripherals in the vehicle 200 may be grouped. For example, Table 1 shows a grouping result of the front-view cameras 201 to 204, the side-view cameras 205 and 206, the surround-view camera 207 to 210, the rear-view cameras 211 and 212, the millimeter-wave radars 213 and 214, the GPS 215, the gateway 216, the ultrasonic radars 217 to 224, the left field of view monitor 225, the right field of view monitor 226, and the lidars 227 to 229.

**Table 1**

| Sensor group | Sensor |
|---|---|
| Sensor group | Front-view cameras 201 to 204, lidar 227, millimeter-wave radar 213, and |
| A | GPS 215 |
| Sensor group B | Side-view cameras 205 and 206, lidars 228 and 229, millimeter-wave radar 214, and gateway 216 |
| Sensor group C | Surround-view cameras 207 to 210 and ultrasonic radars 217 to 224 |
| Sensor group D | Rear-view cameras 211 and 212, left field of view monitor 225, and right field of view monitor 226 |
| ... | ... |

The foregoing grouping of the sensors and the peripherals in the vehicle 200 is merely an example. This is not specifically limited in embodiments of this application.

The foregoing sensor groups each may include a sensor and/or a peripheral. For example, in the sensor group B, the side-view cameras 205 and 206, the lidars 228 and 229, and the millimeter-wave radar 214 are sensors, and the gateway 216 is a peripheral. For another example, in the sensor group D, the rear-view cameras 211 and 212 are sensors, and the left field of view monitor 225 and the right field of view monitor 226 are peripherals.

For example, the first sensor group may include sensors in the sensor group A, the sensor group B, the sensor group C, and the sensor group D. When the processor 2304 is powered on, the processor 2304 may obtain data from the sensors in the sensor group A, the sensor group B, the sensor group C, and the sensor group D, and process the data. In this way, after the processor 2304 is powered on, it may be determined whether states of the sensor and the peripheral in each sensor group are normal.

That the first data corresponds to the first frame rate may be understood as obtaining the first data collected by the sensor in the first sensor group at the first frame rate. The first sensor group may include a plurality of types of sensors, and the first frame rate may include a frame rate corresponding to each type of the plurality of sensors.

For example, Table 2 shows a frame rate at which each of the sensors in the first sensor group (for example, including the sensor group A, the sensor group B, the sensor group C, and the sensor group D) collects the first data.

**Table 2**

| Sensor | Frame rate |
|---|---|
| Front-view cameras 201 to 204 | 30 fps |
| Side-view cameras 205 and 206 | 30 fps |
| Surround-view cameras 207 to 210 | 10 fps |
| Rear-view cameras 211 and 212 | 30 fps |
| Millimeter-wave radar 213 | 13 fps |
| Millimeter-wave radar 214 | 16 fps |
| Lidars 227 to 229 | 10 fps |
| Left field of view monitor 225 and right field of view monitor 226 | 20 fps |
| ... | ... |

Correspondences between different types of sensors and frame rates shown in Table 2 are merely examples. This is not specifically limited in embodiments of this application.

That the first data corresponds to the first frame rate may alternatively be understood as obtaining data collected by a sensor in the first sensor group at a frame rate greater than the first frame rate and processing the data, so that a frame rate corresponding to finally obtained data is the first frame rate. For example, the processor 2304 may obtain image data 1 collected by a camera, where the image data 1 may be data collected when a frame rate of the camera is 30 fps. The processor 2304 may choose to process the first data (a part of data in the image data 1), to enable a frame rate corresponding to the part of data in the image data 1 to be 15 fps.

S302: When it is determined that a preset condition is met, obtain second data from a sensor in a second sensor group and process the second data, or obtain third data from the sensor in the first sensor group and process the third data, where the third data corresponds to a second frame rate, and the first frame rate is different from the second frame rate.

In an embodiment, the second sensor group includes a part of sensors in the first sensor group, and the first frame rate is greater than the second frame rate.

For example, the first sensor group includes sensors in the sensor group A, the sensor group B, the sensor group C, and the sensor group D. In this case, the second sensor group may include sensors in the sensor group A, the sensor group B, and the sensor group C; the second sensor group may include sensors in the sensor group A, the sensor group B, and the sensor group D; the second sensor group may include sensors in the sensor group B, the sensor group C, and the sensor group D; the second sensor group may include sensors in the sensor group A and the sensor group B; the second sensor group may include sensors in the sensor group A and the sensor group C; the second sensor group may include sensors in the sensor group A and the sensor group D; the second sensor group may include sensors in the sensor group B and the sensor group C; the second sensor group may include sensors in the sensor group B and the sensor group D; the second sensor group may include sensors in the sensor group C and the sensor group D; the second sensor group may include sensors in the sensor group A; the second sensor group may include sensors in the sensor group B; the second sensor group may include sensors in the sensor group C; or the second sensor group may include sensors in the sensor group D.

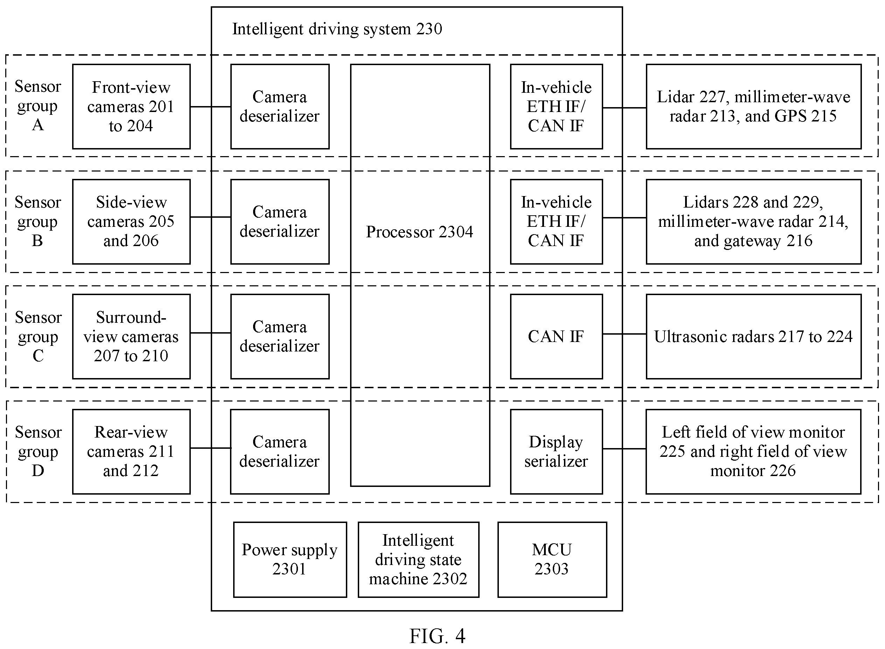

For example, FIG. 4 is a diagram of a sensor group of an intelligent driving device according to an embodiment of this application. As shown in FIG. 4, a system state of the intelligent driving device may be classified into S1 to S4. In the system state S1, the processor 2304 may process data from a sensor in the sensor group A. In the system state S2, the processor 2304 may process data from sensors in the sensor group A and the sensor group B. In the system state S3, the processor 2304 may process data from sensors in the sensor group A, the sensor group B, and the sensor group C. In the system state S4, the processor 2304 may process data from sensors in the sensor group A, the sensor group B, the sensor group C, and the sensor group D.

The intelligent driving system 230 may further include a camera deserializer, an in-vehicle Ethernet interface (ethernet interface, ETH IF), a controller area network interface (controller area network interface, CAN IF), and a display serializer. The camera deserializer is configured to connect to the front-view cameras 201 to 204, the side-view cameras 205 and 206, the surround-view camera 207 to 210, and the rear-view cameras 211 and 212. The in-vehicle ETH IF or the CAN IF is configured to connect to the lidars 227 to 229, the millimeter-wave radars 213 and 214, the GPS 215, and the gateway 216. The CAN IF is further configured to connect to the ultrasonic radars 217 to 224. The display serializer is configured to connect to the left field of view monitor 225 and the right field of view monitor 226.

In an embodiment, the system state of the intelligent driving device may further include S1' to S4'. For example, a frame rate corresponding to data obtained by the processor 2304 from a sensor in the system state S4' is lower than a frame rate corresponding to data obtained by the processor 2304 from the same sensor in the system state S4. For example, the frame rate of the data obtained in the system state S4' is half of the frame rate of the data obtained in the system state S4.

The system state S1 may be a system state that meets a regulation requirement. For example, the system state S1 may meet safe stopping during automatic emergency braking (autonomous emergency braking, AEB). The system state S2 can support a basic function. The system state S3 can support an advanced function. The system state S4 can support all functions of the intelligent driving device.

The foregoing is described by using an example in which the intelligent driving device includes S1 to S4 and S1' to S4'. A quantity of system states is not specifically limited in embodiments of this application. The intelligent driving device may include some system states in S1 to S4 and S1' to S4'. For example, the system state of the intelligent driving device may include S4, S4', S3, S2, and S1. Alternatively, the intelligent driving device may include other system states than S1 to S4 and S1' to S4'.

For example, Table 3 shows power consumption of the intelligent driving system 230 in the system states S4, S4', S3, S2, and S1.

**Table 3**

| System state | Power consumption of the intelligent driving system |
|---|---|
| S4 | 120 W |
| S4' | 100 W |
| S3 | 80 W |
| S2 | 60 W |
| S1 | 50 W |

It can be learned from the power consumption results shown in Table 3 that power consumption of the intelligent driving system 230 in the system states S4, S4', S3, S2, and S1 gradually decreases.

For example, in S301, the intelligent driving device may be in the system state S4.

For example, the intelligent driving device switches the system state from S4 to S3. Table 4 shows a frame rate at which each of the sensors in the second sensor group (for example, including the sensor group A, the sensor group B, and the sensor group C) collects the second data.

**Table 4**

| Sensor | Frame rate |
|---|---|
| Front-view cameras 201 to 204 | 30 fps |
| Side-view cameras 205 and 206 | 30 fps |
| Surround-view cameras 207 to 210 | 10 fps |
| Millimeter-wave radar 213 | 13 fps |
| Millimeter-wave radar 214 | 16 fps |
| Lidars 227 to 229 | 10 fps |
| ... | ... |

In this embodiment of this application, when the preset condition is met, the second data from the sensor in the second sensor group may be processed. This helps reduce power consumption of the intelligent driving device, and further improves endurance and economy of the intelligent driving device. In addition, this helps avoid an excessively high temperature of a component in the intelligent driving system, and helps improve reliability and security of the intelligent driving system.

For example, the intelligent driving device switches the system state from S4 to S4'. Table 5 shows a frame rate at which each of the sensors in the first sensor group (for example, including the sensor group A, the sensor group B, the sensor group C, and the sensor group D) collects the third data.

**Table 5**

| Sensor | Frame rate |
|---|---|
| Front-view cameras 201 to 204 | 15 fps |
| Side-view cameras 205 and 206 | 15 fps |
| Surround-view cameras 207 to 210 | 5 fps |
| Rear-view cameras 211 and 212 | 15 fps |
| Millimeter-wave radar 213 | 7 fps |
| Millimeter-wave radar 214 | 8 fps |
| Lidars 227 to 229 | 5 fps |
| Left field of view monitor 225 and right field of view monitor 226 | 10 fps |
| ... | ... |

The foregoing is described by using an example in which the second frame rate is half of the first frame rate. Embodiments of this application is not limited thereto. For example, the second frame rate may alternatively be one third of the first frame rate.

The preset condition may include switching of a driving scenario of the intelligent driving device.

In an embodiment, the obtaining first data from a sensor in a first sensor group and processing the first data includes: when it is determined that the intelligent driving device is in a first driving scenario, obtaining the first data from the sensor in the first sensor group and processing the first data, where the first driving scenario is associated with the first frame rate; and the when it is determined that a preset condition is met, obtaining second data from a sensor in a second sensor group and processing the second data, or obtaining third data from the sensor in the first sensor group and processing the third data includes: when it is determined that the intelligent driving device switches from the first driving scenario to a second driving scenario, obtaining the second data from the sensor in the second sensor group and processing the second data, or obtaining the third data from the sensor in the first sensor group and processing the third data, where the second driving scenario is associated with the second frame rate.

The foregoing different driving scenarios may be associated with different frame rates.

For example, in a highway pilot (highway pilot, HWP) scenario, the intelligent driving device may be in the system state S4. In this case, a frame rate of the data from the sensors in the sensor group A, the sensor group B, the sensor group C, and the sensor group D is a frame rate 1. It should be understood that the frame rate 1 may include a plurality of frame rates corresponding to a plurality of sensors.

For another example, in a highway assist (highway assist, HWA) scenario, the intelligent driving device may be in the system state S4'. In this case, a frame rate of data from the sensors in the sensor group A, the sensor group B, the sensor group C, and the sensor group D is a frame rate 2. The frame rate 2 may be less than the frame rate 1. For example, the frame rate 2 is half of the frame rate 1.

That the frame rate 2 is less than the frame rate 1 may be understood as that a frame rate corresponding to data from each of at least a part of sensors in the sensor group A, the sensor group B, the sensor group C, and the sensor group D in S4' is less than a frame rate corresponding to data from each of the at least a part of sensors in S4.

In an embodiment, a driving scenario of the intelligent driving device includes but is not limited to an HWP scenario, an HWA scenario, a traffic jam pilot (traffic jam pilot, TJP) scenario, an automotive lane change (automotive lane change, ALC) scenario, and an automatic parking scenario. The automatic parking scenario may include auto parking assist (auto parking assist, APA), remote parking assist (remote parking assist, RPA), auto valet parking (auto valet parking, AVP), and the like.

For example, the first driving scenario and the second driving scenario may be different driving scenarios. For example, if the first driving scenario is the highway pilot scenario, the first sensor group may include the sensor group A, the sensor group B, the sensor group C, and the sensor group D. If the second driving scenario is the highway assist scenario, the second sensor group may include the sensor group A, the sensor group B, and the sensor group C.

In this embodiment of this application, data from a part of sensors is processed or data corresponding to a reduced frame rate is processed. This helps reduce power consumption of the intelligent driving device, and further helps improve endurance and economy of the intelligent driving device. In addition, this helps avoid the excessively high temperature of the component in the intelligent driving system, and helps improve reliability and security of the intelligent driving system.

In some possible implementations, the first driving scenario and the second driving scenario may be different driving functions in a same driving scenario.

For example, the different driving functions may correspond to different levels of automation.

For example, the levels of automation may be based on a classification standard of the society of automotive engineers (society of automotive engineers, SAE). For example, the levels of automation may be classified into L0 to L5. L0 indicates no automation, L1 indicates driving assistance, L2 indicates partial automation, L3 indicates conditional automation, L4 indicates high automation, and L5 indicates full automation. For example, for the APA, a driver does not need to control a steering wheel, but still needs to control a throttle and a brake of a vehicle. For the RPA, the driver may remotely park the vehicle outside the vehicle by using a terminal device (for example, a mobile phone). For the AVP, the vehicle may complete parking without the driver. From a perspective of a corresponding level of automation, the APA is approximately at the level L1, the RPA is approximately at the level L2 or L3, and the AVP is approximately at the level L4.

For example, if a function corresponding to the first driving scenario is AVP, the first sensor group may include the sensor group A, the sensor group B, the sensor group C, and the sensor group D. If a function corresponding to the second driving scenario is APA, the second sensor group may include the sensor group A, the sensor group B, and the sensor group C.

In an embodiment, the obtaining second data from a sensor in a second sensor group and processing the second data includes: obtaining data from the sensor in the first sensor group and processing the second data that is in the data and that is collected by the sensor in the second sensor group.

In an embodiment, before the obtaining second data from a sensor in a second sensor group and processing the second data, the method includes: disabling sensors in the first sensor group except the sensors in the second sensor group.

For example, the disabling sensors in the first sensor group except the sensors in the second sensor group includes: disabling the sensors in the first sensor group except the sensors in the second sensor group by using a power gate or a clock gate.

In an embodiment, when it is determined that the intelligent driving device switches from the first driving scenario to the second driving scenario, the second data is obtained from the sensor in the second sensor group and the second data is processed. The method further includes: when it is determined that the intelligent driving device switches from the second driving scenario to a third driving scenario, obtaining fifth data from a sensor in a third sensor group and processing the fifth data, or obtaining sixth data from the sensor in the second sensor group and processing the sixth data, where the sixth data corresponds to a third frame rate, the third driving scenario is associated with the third frame rate, the third sensor includes a part of sensors in the second sensor group, and the second frame rate is greater than the third frame rate.

For example, the second sensor group includes sensors in the sensor group A, the sensor group B, and the sensor group C. In this case, the third sensor group may include sensors in the sensor group A and the sensor group B; the third sensor group may include sensors in the sensor group A and the sensor group C; the third sensor group may include sensors in the sensor group B and the sensor group C; the second sensor group may include sensors in the sensor group A; the second sensor group may include sensors in the sensor group B; or the second sensor group may include sensors in the sensor group C.

For example, the second driving scenario is the highway assist scenario, and the third driving scenario may be the traffic jam pilot scenario. The third sensor group may include the sensor group A and the sensor group B. For example, the intelligent driving device switches the system state from S3 to S2. Table 6 shows a frame rate at which each of the sensors in the third sensor group (for example, including the sensor group A and the sensor group B) collects the fifth data.

**Table 6**

| Sensor | Frame rate |
|---|---|
| Front-view cameras 201 to 204 | 30 fps |
| Side-view cameras 205 and 206 | 30 fps |
| Millimeter-wave radar 213 | 13 fps |
| Millimeter-wave radar 214 | 16 fps |
| Lidars 227 to 229 | 10 fps |
| ... | ... |

For example, when it is determined that the intelligent driving device switches from the second driving scenario to the third driving scenario, the sensor group C may be selected to be disabled, so that the fifth data from the sensor group A and the sensor group B may be processed.

For example, the intelligent driving device switches the system state from S3 to S3'. Table 7 shows a frame rate at which each of the sensors in the second sensor group (for example, including the sensor group A and the sensor group B) collects the sixth data.

**Table 7**

| Sensor | Frame rate |
|---|---|
| Front-view cameras 201 to 204 | 15 fps |
| Side-view cameras 205 and 206 | 15 fps |
| Surround-view cameras 207 to 210 | 5 fps |
| Millimeter-wave radar 213 | 7 fps |
| Millimeter-wave radar 214 | 8 fps |
| Lidars 227 to 229 | 5 fps |
| ... | ... |

The foregoing is described by using an example in which the third frame rate is half of the second frame rate. Embodiments of this application is not limited thereto. For example, the third frame rate may alternatively be one third of the second frame rate.

In an embodiment, the processing the first data includes: processing the first data by using a plurality of processing apparatuses in a first processor; and the obtaining second data from a sensor in a second sensor group and processing the second data, or obtaining third data from the sensor in the first sensor group and processing the third data includes: processing the second data by using a part of processing apparatuses in the plurality of processing apparatuses, or processing the third data by using the part of processing apparatuses.

For example, the first processor is the processor 2304. The processor 2304 may include three SOCs. The processor 2304 may process the first data by using the three SOCs. The processor 2304 may process the second data or the third data by using two of the three SOCs. The processor 2304 may process the fifth data or the sixth data by using one of the three SOCs.

For example, the first processor is the processor 2304. The processor 2304 may include one SOC, and the SOC may include five computing cores. The processor 2304 may process the first data by using the five computing cores. The processor 2304 may process the second data or the third data by using four of the five computing cores. The processor 2304 may process the fifth data or the sixth data by using three of the five computing cores.

In an embodiment, before the processing the second data or the third data, the method further includes: disabling processing apparatuses other than the part of processing apparatuses in the plurality of processing apparatuses.

In an embodiment, the disabling processing apparatuses other than the part of processing apparatuses in the plurality of processing apparatuses includes: disabling the processing apparatuses other than the part of processing apparatuses in the plurality of processing apparatuses by using a power gate or a clock gate.

In an embodiment, before the obtaining second data from a sensor in a second sensor group and processing the second data, or obtaining third data from the sensor in the first sensor group and processing the third data, the method further includes: determining that a temperature of the first processor is greater than or equal to a first preset temperature and less than a second preset temperature, where the second preset temperature is greater than the first preset temperature.

For example, the first processor is the processor 2304. The processor 2304 may include three SOCs: an SOC 1, an SOC 2, and an SOC 3. The intelligent driving state machine 2302 may separately detect temperatures of the SOC 1, the SOC 2, and the SOC 3. The processor 2304 may obtain the temperature of each SOC from the intelligent driving state machine 2302. Therefore, the processor 2304 can determine that a temperature of the processor 2304 is the temperature of the SOC 1, where the temperature of the SOC 1 is greater than the temperature of the SOC 2 and greater than the temperature of the SOC 3.

For example, the first processor is the processor 2304. The processor 2304 may include one SOC, and the SOC includes a computing core 1, a computing core 2, and a computing core 3. The intelligent driving state machine 2302 may separately detect temperatures of the computing core 1, the computing core 2, and the computing core 3. The processor 2304 may obtain the temperature of each computing core from the intelligent driving state machine 2302. Therefore, the processor 2304 can determine that a temperature of the processor 2304 is the temperature of the computing core 1, where the temperature of the computing core 1 is greater than the temperature of the computing core 2 and greater than the temperature of the computing core 3.

In an embodiment, the temperature of the first processor may be an average value of temperatures of the plurality of processing apparatuses.

For example, the first preset temperature is 75°C, and the second preset temperature is 105°C. In view of this, when the intelligent driving device switches from the first driving scenario to the second driving scenario and the temperature of the first processor is greater than or equal to 75°C and less than 105°C, the second data from the second sensor group may be processed, or the third data from the first sensor group may be processed.

In an embodiment, the method 300 further includes: when it is determined that the temperature of the first processor is greater than or equal to the second preset temperature, stopping data processing by using the first processor.

For example, when the temperature of the processor 2304 is greater than or equal to 105°C, data processing by using the processor 2304 may be stopped. In this case, the MCU 2303 may take over the vehicle 200.

In an embodiment, the method 300 further includes: when it is determined that duration in which the temperature of the first processor is greater than or equal to the second preset temperature is greater than or equal to first preset duration, stopping data processing by using the first processor.

For example, the first preset duration is 15 minutes (minutes, min). When duration in which the temperature of the first processor is greater than or equal to 105°C is greater than or equal to 15 min, data processing by using the first processor may be stopped.

In an embodiment, the method 300 further includes: when it is determined that the intelligent driving device switches from the second intelligent driving scenario to the first intelligent driving scenario, obtaining fourth data from the sensor in the first sensor group and processing the fourth data, where the fourth data corresponds to the first frame rate.

The preset condition may include determining the temperature of the first processor.

In an embodiment, the processing the first data includes: when it is determined that the temperature of the first processor is less than the first preset temperature, processing the first data by using the first processor; and the when it is determined that a preset condition is met, obtaining second data from a sensor in a second sensor group and processing the second data, or obtaining third data from the sensor in the first sensor group and processing the third data includes: when it is determined that the temperature of the first processor is greater than or equal to the first preset temperature and less than the second preset temperature, obtaining the second data from the sensor in the second sensor group and processing the second data, or obtaining the third data from the sensor in the first sensor group and processing the third data, where the first preset temperature is less than the second preset temperature.

For example, the first preset temperature is 75°C, and the second preset temperature is 105°C.

In an embodiment, the obtaining second data from a sensor in a second sensor group and processing the second data includes: obtaining data from the sensor in the first sensor group and processing the second data that is in the data and that is collected by the sensor in the second sensor group.

In an embodiment, before the obtaining second data from a sensor in a second sensor group and processing the second data, the method includes: disabling sensors in the first sensor group except the sensors in the second sensor group.

In an embodiment, the first processor includes a plurality of processing apparatuses. The processing the first data by using the first processor includes: processing the first data by using the plurality of processing apparatuses. The obtaining second data from a sensor in a second sensor group and processing the second data, or obtaining third data from the sensor in the first sensor group and processing the third data includes: processing the second data by using a part of processing apparatuses in the plurality of processing apparatuses, or processing the third data by using the part of processing apparatuses.

For example, the first processor is the processor 2304. The processor 2304 may include one SOC, and the SOC may include five computing cores. The processor 2304 may process the first data by using the five computing cores. The processor 2304 may process the second data or the third data by using four of the five computing cores.

In an embodiment, the method further includes: when it is determined that the temperature of the first processor is greater than or equal to the second preset temperature, stopping data processing by using the first processor.

In an embodiment, the method 300 further includes: when it is determined that duration in which the temperature of the first processor is greater than or equal to the second preset temperature is greater than or equal to first preset duration, stopping data processing by using the first processor.

In an embodiment, the method 300 further includes: when it is determined that the temperature of the first processor is less than or equal to a third preset temperature, obtaining fourth data from the sensor in the first sensor group and processing the fourth data, where the fourth data corresponds to the first frame rate, and the first preset temperature is greater than the third preset temperature.

For example, the third preset temperature is 70°C. In view of this, when the temperature of the first processor is less than or equal to 70°C, the fourth data from the sensor in the first sensor group may be processed.

In this embodiment of this application, a hysteresis temperature (the hysteresis temperature is a difference between the first preset temperature and the second preset temperature) is set, so that the intelligent driving device can be prevented from switching back and forth in different system states. This helps improve reliability and security of the intelligent driving system.

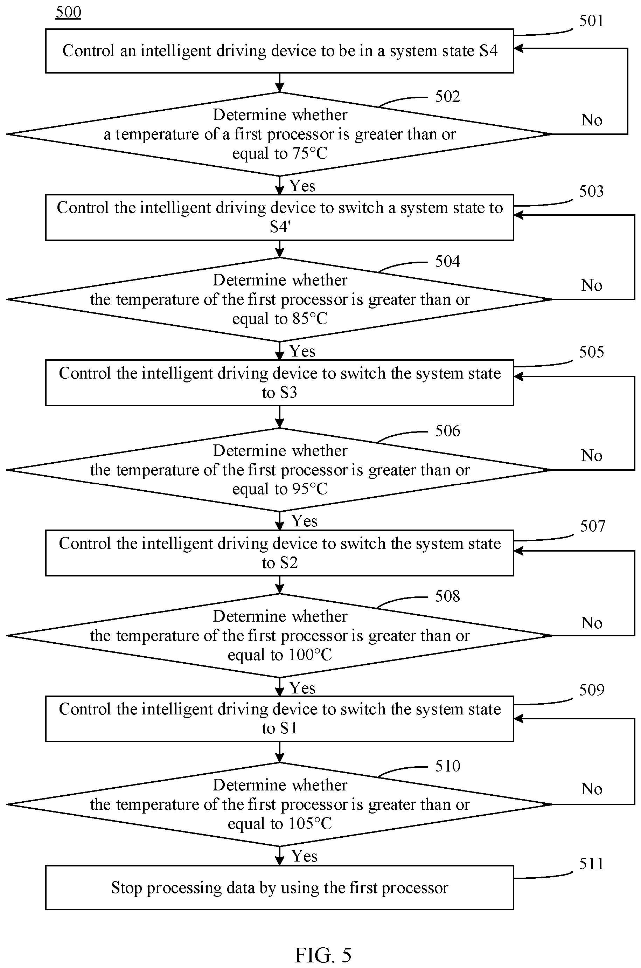

FIG. 5 is a schematic flowchart of a system state switching method 500 according to an embodiment of this application. The method 500 may be performed by the intelligent driving device 100 or the vehicle 200, or the method 500 may be performed by the computing platform 120, or the method 500 may be performed by the SOC in the computing platform 120, or the method 500 may be performed by the processor in the computing platform 120, or the method 500 may be performed by the intelligent driving system 230, or the method 500 may be performed by the processor 2304. The method 500 may include the following steps.

S501: When the temperature of the first processor is less than 75°C, control the intelligent driving device to be in the system state S4.

For example, the first processor is the processor 2304. When the processor 2304 is powered on by using the power supply 2301, the temperature of the processor 2304 is less than 75°C, and the intelligent driving device may be controlled to be in the system state S4. In this case, data from sensors in the sensor group A, the sensor group B, the sensor group C, and the sensor group D may be processed by using the processor 2304, and a frame rate corresponding to the data is the first frame rate.

S502: Determine whether the temperature of the first processor is greater than or equal to 75°C.

If the temperature of the first processor is greater than or equal to 75°C, S503 is performed; otherwise, the system state continues to be kept in S4.

S503: Control the intelligent driving device to switch the system state from S4 to S4'.

For example, when the temperature of the first processor is greater than or equal to 75°C, the intelligent driving device may switch the system state from S4 to S4'. In this case, data from sensors in the sensor group A, the sensor group B, the sensor group C, and the sensor group D may be processed. A frame rate corresponding to the data is the second frame rate, and the second frame rate is less than the first frame rate.

In an embodiment, when S4 is switched to S4', it may be determined whether the temperature of the first processor is less than or equal to 70°C. When the temperature of the first processor is less than or equal to 70°C, the system state may be switched from S4' to S4.

In this embodiment of this application, the hysteresis temperature (for example, 5°C) is set, so that the system state can be prevented from switching back and forth between S4 and S4'.

S504: Determine whether the temperature of the first processor is greater than or equal to 85°C.

If the temperature of the first processor is greater than or equal to 85°C, S505 is performed; otherwise, the system state continues to be kept in S4'.

S505: Control the intelligent driving device to switch the system state from S4' to S3.

For example, when the temperature of the first processor is greater than or equal to 85°C, the intelligent driving device may switch the system state from S4' to S3. In this case, the first processor may process data from sensors in the sensor group A, the sensor group B, and the sensor group C.

In an embodiment, when S4' is switched to S3, it may be determined whether the temperature of the first processor is less than or equal to 80°C. When the temperature of the first processor is less than or equal to 80°C, the system state may be switched from S3 to S4'.

In this embodiment of this application, the hysteresis temperature (for example, 5°C) is set, so that the system state can be prevented from switching back and forth between S4' and S3.

S506: Determine whether the temperature of the first processor is greater than or equal to 95°C.

If the temperature of the first processor is greater than or equal to 95°C, S507 is performed; otherwise, the system state continues to be kept in S3.

S507: Control the intelligent driving device to switch the system state from S3 to S2.

For example, when the temperature of the first processor is greater than or equal to 95°C, the intelligent driving device may switch the system state from S3 to S2. In this case, the first processor may process data from sensors in the sensor group A and the sensor group B.

In an embodiment, when S3 is switched to S2, it may be determined whether the temperature of the first processor is less than or equal to 90°C. When the temperature of the first processor is less than or equal to 90°C, the system state may be switched from S2 to S3.

In this embodiment of this application, the hysteresis temperature (for example, 5°C) is set, so that the system state can be prevented from switching back and forth between S3 and S2.

S508: Determine whether the temperature of the first processor is greater than or equal to 100°C.

If the temperature of the first processor is greater than or equal to 100°C, S509 is performed; otherwise, the system state continues to be kept in S2.

S509: Control the intelligent driving device to switch the system state from S2 to S1.

For example, when the temperature of the first processor is greater than or equal to 100°C, the intelligent driving device may switch the system state from S2 to S1. In this case, the first processor may process data from sensors in the sensor group A.

In an embodiment, when S2 is switched to S1, it may be determined whether the temperature of the first processor is less than or equal to 97°C. When the temperature of the first processor is less than or equal to 97°C, the system state may be switched from S1 to S2.

In this embodiment of this application, the hysteresis temperature (for example, 3°C) is set, so that the system state can be prevented from switching back and forth between S2 and S1.

S510: Determine whether the temperature of the first processor is greater than or equal to 105°C.

If the temperature of the first processor is greater than or equal to 105°C, S511 is performed; otherwise, the system state continues to be kept in S1.

S511: Stop processing data by using the first processor.

In an embodiment, when it is detected that duration in which the temperature of the first processor is greater than or equal to 105°C is greater than or equal to 15 min, data processing by using the first processor is stopped. In this case, the MCU may take over the vehicle.

In an embodiment, when duration for stopping data processing by using the first processor is greater than or equal to second preset duration, the intelligent driving device may be controlled to enter the system state S4.

For example, the second preset duration is 15 min.

Alternatively, the preset condition may be determining a time period corresponding to the intelligent driving device.

In an embodiment, the processing the first data includes: processing the first data in a first time period; and the when it is determined that a preset condition is met, obtaining second data from a sensor in a second sensor group and processing the second data, or obtaining third data from the sensor in the first sensor group and processing the third data includes: when the first time period ends, obtaining the second data from the sensor in the second sensor group and processing the second data, or obtaining the third data from the sensor in the first sensor group and processing the third data.

For example, in a time period from T₁ to T₂, the intelligent driving device may be controlled to be in the system state S4; and in a time period from T₂ to T₃, the intelligent driving device may be controlled to switch the system state from S4 to S4'.

In an embodiment, the second sensor group includes the first sensor group and a third sensor group, and the first frame rate is less than the second frame rate.

For example, the first sensor group may include the sensor group A, and the third sensor group may include the sensor group B. In this case, the second sensor group may include the sensor group A and the sensor group B. For example, in S301, the intelligent driving device may be in the system state S1, and when a preset condition is met, the system state of the intelligent driving device may be switched from S1 to S2.

In an embodiment, the obtaining first data from a sensor in a first sensor group and processing the first data includes: when it is determined that the intelligent driving device is in a first driving scenario, obtaining the first data from the sensor in the first sensor group and processing the first data, where the first driving scenario is associated with the first frame rate; and the when it is determined that a preset condition is met, obtaining second data from a sensor in a second sensor group and processing the second data, or obtaining third data from the sensor in the first sensor group and processing the third data includes: when it is determined that the intelligent driving device switches from the first driving scenario to a second driving scenario, obtaining the second data from the sensor in the second sensor group and processing the second data, or obtaining the third data from the sensor in the first sensor group and processing the third data, where the second driving scenario is associated with the second frame rate.

For example, the first driving scenario is a highway assist scenario, and the second driving scenario is a highway pilot scenario. When the intelligent driving device is in the highway assist scenario, the intelligent driving device is in the system state S3. In this case, the first processor may process data 1 from the sensor group A, the sensor group B, and the sensor group C. A frame rate corresponding to the data 1 is a frame rate 1. When it is determined that the intelligent driving scenario is switched from the highway assist scenario to the highway pilot scenario, the intelligent driving device may switch the system state from S3 to S4. In this case, the first processor may process data 2 from the sensor group A, the sensor group B, the sensor group C, and the sensor group D. A frame rate corresponding to the data 2 is a frame rate 2.

Alternatively, when it is determined that the intelligent driving scenario is switched from the highway assist scenario to the highway pilot scenario, the intelligent driving device may switch the system state from S3 to S4'. In this case, the first processor may process data 3 from the sensor group A, the sensor group B, the sensor group C, and the sensor group D. A frame rate corresponding to the data 3 is a frame rate 3, and the frame rate 3 is less than the frame rate 2.

Alternatively, when it is determined that the intelligent driving scenario is switched from the highway assist scenario to the highway pilot scenario, the intelligent driving device may switch the system state from S3 to S3". In this case, the first processor may process data 4 from the sensor group A, the sensor group B, and the sensor group C. A frame rate of the data 4 is a frame rate 4, and the frame rate 4 is greater than the frame rate 1.

In an embodiment, the processing the first data includes: when it is determined that a temperature of a first processor is greater than or equal to a fourth preset temperature, processing the first data by using the first processor; and the when it is determined that a preset condition is met, obtaining second data from a sensor in a second sensor group and processing the second data, or obtaining third data from the sensor in the first sensor group and processing the third data includes: when it is determined that the temperature of the first processor is less than the fourth preset temperature and greater than or equal to the fifth preset temperature, obtaining the second data from the sensor in the second sensor group and processing the second data, or obtaining the third data from the sensor in the first sensor group and processing the third data, where the fourth preset temperature is greater than the fifth preset temperature.

For example, the fourth preset temperature is 90°C, and the fifth preset temperature is 80°C.

When the temperature of the first processor is greater than or equal to 90°C, the intelligent driving device may be in the system state S2. In this case, the first processor may process data from the sensor group A and the sensor group B. When the temperature of the first processor is less than 90°C and greater than or equal to 80°C, the intelligent driving device may switch the system state from S2 to S3. In this case, the first processor may process data from sensors in the sensor group A, the sensor group B, and the sensor group C.

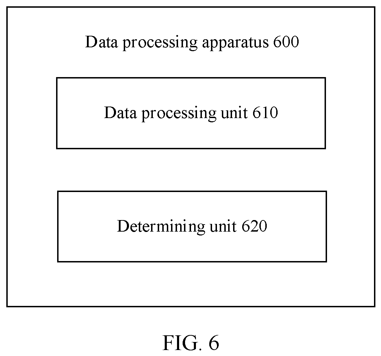

FIG. 6 is a block diagram of a data processing apparatus 600 according to an embodiment of this application. As shown in FIG. 6, the apparatus 600 includes: a data processing unit 610, configured to: obtain first data from a sensor in a first sensor group and process the first data, where the first data corresponds to a first frame rate; and a determining unit 620, configured to determine that a preset condition is met. The data processing unit 610 is further configured to: obtain second data from a sensor in a second sensor group and process the second data, or obtain third data from the sensor in the first sensor group and process the third data, where the third data corresponds to a second frame rate, and the first frame rate is different from the second frame rate.

Optionally, the second sensor group includes a part of sensors in the first sensor group, and the first frame rate is greater than the second frame rate.

Optionally, the data processing unit 610 is configured to: when the determining unit 620 determines that an intelligent driving device is in a first driving scenario, obtain the first data from the sensor in the first sensor group and process the first data, where the first driving scenario is associated with the first frame rate; and when the determining unit 620 determines that the intelligent driving device switches from the first driving scenario to a second driving scenario, obtain the second data from the sensor in the second sensor group and process the second data, or obtain the third data from the sensor in the first sensor group and process the third data, where the second driving scenario is associated with the second frame rate.

Optionally, the data processing unit 610 is configured to: process the first data by using a plurality of processing apparatuses in a first processor; and process the second data by using a part of processing apparatuses in the plurality of processing apparatuses, or process the third data by using the part of processing apparatuses.

Optionally, the determining unit 620 is further configured to: before the data processing unit 610 processes the second data or the third data, determine that a temperature of the first processor is greater than or equal to a first preset temperature and less than a second preset temperature, where the second preset temperature is greater than the first preset temperature.

Optionally, the determining unit 620 is further configured to determine that the temperature of the first processor is greater than or equal to the second preset temperature; and the data processing unit 610 is further configured to stop data processing by using the first processor.

Optionally, the determining unit 620 is further configured to determine that duration in which the temperature of the first processor is greater than or equal to the second preset temperature is greater than or equal to first preset duration; and the data processing unit 610 is further configured to stop data processing by using the first processor.

Optionally, the determining unit 620 is further configured to determine that the intelligent driving device switches from the second intelligent driving scenario to the first intelligent driving scenario; and the data processing unit 610 is further configured to: obtain fourth data from the sensor in the first sensor group and process the fourth data, where the fourth data corresponds to the first frame rate.

Optionally, the data processing unit 610 is configured to: process the first data by using a first processor; and when the determining unit 620 determines that a temperature of the first processor is greater than or equal to a first preset temperature and less than a second preset temperature, obtain the second data from the sensor in the second sensor group and process the second data, or obtain the third data from the sensor in the first sensor group and process the third data, where the first preset temperature is less than the second preset temperature.

Optionally, the first processor includes a plurality of processing apparatuses, and the data processing unit 610 is configured to: process the first data by using the plurality of processing apparatuses; and process the second data by using a part of processing apparatuses in the plurality of processing apparatuses, or process the third data by using the part of processing apparatuses.

Optionally, the determining unit 620 is further configured to determine that the temperature of the first processor is greater than or equal to the second preset temperature; and the data processing unit is further configured to stop data processing by using the first processor.

Optionally, the determining unit 620 is further configured to determine that duration in which the temperature of the first processor is greater than or equal to the second preset temperature is greater than or equal to first preset duration; and the data processing unit 610 is further configured to stop data processing by using the first processor.

Optionally, the determining unit 620 is further configured to determine that the temperature of the first processor is less than or equal to a third preset temperature; and the data processing unit 610 is further configured to: obtain fourth data from the sensor in the first sensor group and process the fourth data, where the fourth data corresponds to the first frame rate, and the first preset temperature is greater than the third preset temperature.

Optionally, the second sensor group includes the first sensor group and a third sensor group, and the first frame rate is less than the second frame rate.

Optionally, the data processing unit 610 is configured to: when the determining unit 620 determines that an intelligent driving device is in a first driving scenario, obtain the first data from the sensor in the first sensor group and process the first data, where the first driving scenario is associated with the first frame rate; and when the determining unit 620 determines that the intelligent driving device switches from the first driving scenario to a second driving scenario, obtain the second data from the sensor in the second sensor group and process the second data, or obtain the third data from the sensor in the first sensor group and process the third data, where the second driving scenario is associated with the second frame rate.

Optionally, the data processing unit 610 is configured to: process the first data by using a first processor; and when the determining unit 620 determines that a temperature of the first processor is less than a fourth preset temperature and greater than or equal to a fifth preset temperature, obtain the second data from the sensor in the second sensor group and process the second data, or obtain the third data from the sensor in the first sensor group and process the third data, where the fourth preset temperature is greater than the fifth preset temperature.

It should be understood that division into units in the foregoing apparatus is merely logical function division. During actual implementation, all or some of the units may be integrated into one physical entity or may be physically separated. In addition, the units in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or implement functions of each unit of the apparatus. The processor is, for example, a general purpose processor like a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated, or may be independently implemented. In an implementation, these units are integrated and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, to enable the apparatus to perform the method or step performed in the foregoing embodiments.

Optionally, if the apparatus is located in an intelligent driving device, the processing unit may be the processors 121 to 12n shown in FIG. 1.

An embodiment of this application further provides a data processing system. The system includes a plurality of sensors and a computing platform. The computing platform may include the apparatus 600.

An embodiment of this application further provides an intelligent driving device. The intelligent driving device may include the data processing apparatus 600 or the data processing system.

Optionally, the intelligent driving device may be a vehicle.

An embodiment of this application further provides a computer program product. The computer program product includes computer program code. When the computer program code is run on a computer, the computer is enabled to perform the data processing method.

An embodiment of this application further provides a computer-readable medium. The computer-readable medium stores program code. When the computer program code is run on a computer, the computer is enabled to perform the data processing method.

In an implementation process, steps in the foregoing methods can be completed by using a hardware integrated logical circuit in a processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that, in this embodiment of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes in embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data processing method, comprising:
determining that an intelligent driving device is in a first driving scenario;
obtaining first data from a sensor in a first sensor group and processing the first data, wherein the first data corresponds to a first frame rate, and the first driving scenario is associated with the first frame rate; and
when it is determined that the intelligent driving device switches from the first driving scenario to a second driving scenario, obtaining second data from a sensor in a second sensor group and processing the second data, or obtaining third data from the sensor in the first sensor group and processing the third data, wherein the third data corresponds to a second frame rate, and the second driving scenario is associated with the second frame rate; and
the second sensor group comprises a part of sensors in the first sensor group, and the first frame rate is greater than the second frame rate.

2. The method according to claim 1, wherein the processing the first data comprises:
processing the first data by using a plurality of processing apparatuses in a first processor; and
the obtaining second data from a sensor in a second sensor group and processing the second data, or obtaining third data from the sensor in the first sensor group and processing the third data comprises:
processing the second data by using a part of processing apparatuses in the plurality of processing apparatuses, or processing the third data by using the part of processing apparatuses.

3. The method according to claim 2, wherein before the obtaining second data from a sensor in a second sensor group and processing the second data, or obtaining third data from the sensor in the first sensor group and processing the third data, the method further comprises:
determining that a temperature of the first processor is greater than or equal to a first preset temperature and less than a second preset temperature, wherein the second preset temperature is greater than the first preset temperature.

4. The method according to claim 3, wherein the method further comprises:
when it is determined that the temperature of the first processor is greater than or equal to the second preset temperature, stopping data processing by using the first processor.

5. The method according to claim 3, wherein the method further comprises:
when it is determined that duration in which the temperature of the first processor is greater than or equal to the second preset temperature is greater than or equal to first preset duration, stopping data processing by using the first processor.

6. The method according to any one of claims 1 to 5, wherein the method further comprises:
when it is determined that the intelligent driving device switches from the second intelligent driving scenario to the first intelligent driving scenario, obtaining fourth data from the sensor in the first sensor group and processing the fourth data, wherein the fourth data corresponds to the first frame rate.

7. A data processing method, comprising:
obtaining first data from a sensor in a first sensor group and processing the first data by using a first processor, wherein the first data corresponds to a first frame rate; and
when it is determined that a temperature of the first processor is greater than or equal to a first preset temperature and less than a second preset temperature, obtaining second data from a sensor in a second sensor group and processing the second data, or obtaining third data from the sensor in the first sensor group and processing the third data, wherein the third data corresponds to a second frame rate; and
the first preset temperature is less than the second preset temperature, the second sensor group comprises a part of sensors in the first sensor group, and the first frame rate is greater than the second frame rate.

8. The method according to claim 7, wherein the first processor comprises a plurality of processing apparatuses, and the processing the first data by using a first processor comprises:
processing the first data by using the plurality of processing apparatuses; and
the obtaining second data from a sensor in a second sensor group and processing the second data, or obtaining third data from the sensor in the first sensor group and processing the third data comprises:
processing the second data by using a part of processing apparatuses in the plurality of processing apparatuses, or processing the third data by using the part of processing apparatuses.

9. The method according to claim 7 or 8, wherein the method further comprises:
when it is determined that the temperature of the first processor is greater than or equal to the second preset temperature, stopping data processing by using the first processor.

10. The method according to claim 7 or 8, wherein the method further comprises:
when it is determined that duration in which the temperature of the first processor is greater than or equal to the second preset temperature is greater than or equal to first preset duration, stopping data processing by using the first processor.

11. The method according to any one of claims 7 to 10, wherein the method further comprises:
when it is determined that the temperature of the first processor is less than or equal to a third preset temperature, obtaining fourth data from the sensor in the first sensor group and processing the fourth data, wherein the fourth data corresponds to the first frame rate; and
the first preset temperature is greater than the third preset temperature.

12. A data processing apparatus, comprising:
a determining unit, configured to determine that an intelligent driving device is in a first driving scenario; and
a data processing unit, configured to: obtain first data from a sensor in a first sensor group and process the first data, wherein the first data corresponds to a first frame rate, and the first driving scenario is associated with the first frame rate; and
the determining unit is further configured to determine that the intelligent driving device switches from the first driving scenario to a second driving scenario;
the data processing unit is further configured to: obtain second data from a sensor in a second sensor group and process the second data, or obtain third data from the sensor in the first sensor group and process the third data, wherein the third data corresponds to a second frame rate, and the second driving scenario is associated with the second frame rate; and
the second sensor group comprises a part of sensors in the first sensor group, and the first frame rate is greater than the second frame rate.

13. The apparatus according to claim 12, wherein the data processing unit is configured to: process the first data by using a plurality of processing apparatuses in a first processor; and
process the second data by using a part of processing apparatuses in the plurality of processing apparatuses, or process the third data by using the part of processing apparatuses.

14. The apparatus according to claim 13, wherein the determining unit is further configured to:
before the data processing unit processes the second data or the third data, determine that a temperature of the first processor is greater than or equal to a first preset temperature and less than a second preset temperature, wherein the second preset temperature is greater than the first preset temperature.

15. The apparatus according to claim 14, wherein the determining unit is further configured to determine that the temperature of the first processor is greater than or equal to the second preset temperature; and
the data processing unit is further configured to stop data processing by using the first processor.

16. The apparatus according to claim 14, wherein the determining unit is further configured to determine that duration in which the temperature of the first processor is greater than or equal to the second preset temperature is greater than or equal to first preset duration; and
the data processing unit is further configured to stop data processing by using the first processor.

17. The apparatus according to any one of claims 12 to 16, wherein the determining unit is further configured to determine that the intelligent driving device switches from the second intelligent driving scenario to the first intelligent driving scenario; and
the data processing unit is further configured to: obtain fourth data from the sensor in the first sensor group and process the fourth data, wherein the fourth data corresponds to the first frame rate.

18. A data processing apparatus, comprising:
a data processing unit, configured to: obtain first data from a sensor in a first sensor group and process the first data by using a first processor, wherein the first data corresponds to a first frame rate; and
a determining unit, configured to determine that a temperature of the first processor is greater than or equal to a first preset temperature and less than a second preset temperature, wherein
the processing unit is further configured to: obtain second data from a sensor in a second sensor group and process the second data, or obtain third data from the sensor in the first sensor group and process the third data, wherein the third data corresponds to a second frame rate; and
the first preset temperature is less than the second preset temperature, the second sensor group comprises a part of sensors in the first sensor group, and the first frame rate is greater than the second frame rate.

19. The apparatus according to claim 18, wherein the first processor comprises a plurality of processing apparatuses, and the data processing unit is configured to:
process the first data by using the plurality of processing apparatuses; and
process the second data by using a part of processing apparatuses in the plurality of processing apparatuses, or process the third data by using the part of processing apparatuses.

20. The apparatus according to claim 18 or 19, wherein the determining unit is further configured to determine that the temperature of the first processor is greater than or equal to the second preset temperature; and
the data processing unit is further configured to stop data processing by using the first processor.

21. The apparatus according to claim 18 or 19, wherein the determining unit is further configured to determine that duration in which the temperature of the first processor is greater than or equal to the second preset temperature is greater than or equal to first preset duration; and
the data processing unit is further configured to stop data processing by using the first processor.

22. The apparatus according to any one of claims 18 to 21, wherein the determining unit is further configured to determine that the temperature of the first processor is less than or equal to a third preset temperature; and
the data processing unit is further configured to: obtain fourth data from the sensor in the first sensor group and process the fourth data, wherein the fourth data corresponds to the first frame rate; and
the first preset temperature is greater than the third preset temperature.

23. A data processing apparatus, comprising:
a memory, configured to store a computer program; and
a processor, configured to execute the computer program stored in the memory, to enable the apparatus to perform the method according to any one of claims 1 to 11.

24. A data processing system, comprising a plurality of sensor groups and a computing platform, wherein the computing platform comprises the data processing apparatus according to any one of claims 12 to 23.

25. An intelligent driving device, comprising the data processing apparatus according to any one of claims 12 to 23, or comprising the data processing system according to claim 24.

26. The intelligent driving device according to claim 25, wherein the intelligent driving device is a vehicle.

27. A computer-readable storage medium, wherein the computer-readable storage medium stores a computer program, and when the computer program is executed by a computer, the data processing method according to any one of claims 1 to 11 is implemented.

28. A chip, wherein the chip comprises a circuit, and the circuit is configured to perform the data processing method according to any one of claims 1 to 11.
